# EUROPÄISCHE PATENTSCHRIFT

(11) **EP 0 570 614 B1**
(45) Veröffentlichungstag und Bekanntmachung des Hinweises auf die Patenterteilung: **03.01.1996**
(21) Anmeldenummer: 92108717.7
(22) Anmeldetag: 23.05.1992
(51) Int. Cl.: B65D 59/00

(54) **Schutzecke**
Corner protector
Cornière de protection

(30) Priorität: 20.05.1992 DE 9207027 U
(43) Veröffentlichungstag der Anmeldung: 24.11.1993
(73) Patentinhaber: IVO-INTERNATIONALE MARKETING- UND VERTRIEBSORGANISATIONSANSTALT, FL-9494 Schaan (LI)
(72) Erfinder:
(74) Vertreter: Elbertzhagen, Otto

(56) Entgegenhaltungen:
- EP-A- 0 255 349
- DE-A- 2 951 402
- GB-A- 1 458 872
- US-A- 4 072 231

## Beschreibung

Die Erfindung bezieht sich auf eine Schutzecke zum Aufsetzen auf die Ecken von plattenförmigen Werkstücken, wie insbesondere Möbelteilen, zu Transportzwecken oder dergleichen, bestehend aus zwei zueinander parallelen Flanschen mit einem diese verbindenden Quersteg, der entsprechend dem von ihm zu erfassenden Eckwinkel über Eck angeordnet ist und der zusammen mit den Flanschen sich zu einem taschenförmigen Hohlkörper ergänzt, der an der dem Quersteg gegenüberliegenden Seite offen ist.

Schutzecken dieser Art (siehe beispielsweise EP-A-0 255 349 oder GB-A-1 458 872) sind einstückig ausgebildet. In der Regel bestehen diese Schutzecken aus einem geschäumten Kunststoff, wie Polystyrol, der zwar gute Dämpfungseigenschaften hat, aber Probleme bei der Entsorgung der Schutzecken nach dem Gebrauch bereitet. Denn bei den Schutzecken bekannter Art handelt es sich um einmal verwendbare Schoner, die aufgrund des geschäumten Kunststoffmaterials nach dem Gebrauch in der Regel beschädigt und schon deshalb nicht wieder benutzbar sind.

Zum anderen haben die Schutzecken in der bekannten Ausführung ein unveränderbares Taschenformat, sie können folglich nicht an unterschiedliche Einsatzfälle angepaßt werden. Insbesondere ist der Abstand der Flansche nicht variierbar, weswegen immer nur Platten oder Plattenstapel von bestimmter Dicke mit Schutzecken eines Formates ausgestattet werden können. In der Praxis bedeutet dies, daß für die unterschiedlichen Anwendungsfälle Schutzecken in vielen verschiedenen Formaten bereit gehalten werden müssen.

Der Erfindung liegt deshalb die Aufgabe zugrunde, eine Schutzecke der gattungsbildenden Art zu schaffen, die wiederverwendbar und in ihrem Aufnahmeformat variabel ist.

Diese Aufgabe wird nach der Erfindung bei einer Schutzecke der gattungsbildenden Art dadurch gelöst, daß der Hohlkörper aus zwei voneinander getrennten Flanschen zusammenfügbar ist, an denen sich zu dem Quersteg zusammenzufügende Stegteile fest angeordnet sind, die einander sichernde Reib- und/oder Formschlußglieder haben.

Das wesentliche an der Erfindung ist, daß der taschenförmige Hohlkörper zur Aufnahme der jeweiligen Ecke einer Platte oder eines Plattenstapels aus zwei voneinander getrennten Teilen zusammengesetzt werden muß, was an Ort und Stelle am Werkstück selbst vorgenommen werden kann, wobei unter Einschluß der jeweiligen Ecke die Flansche senkrecht zu ihrer Ebene zusammengedrückt werden, und die an den Stegteilen vorhandenen Reib- oder Formschlußglieder ein Auseinanderfallen der zusammengefügten Flansche verhindern. Im Falle eines Plattenstapels kann damit zumindest vorübergehend ein Verspannen der einzelnen Platten erzielt werden. Andererseits ist die Sicherung der Reib- oder Formschlußglieder, durch die die zusammengefügten Flansche zusammengehalten werden, gegebenenfalls mittels eines Werkzeugs wieder überwindbar, damit die Schutzecke ohne Beschädigung der betreffenden Platte oder des Plattenstapels entfernt und die einzelnen Flansche wieder verwendet werden können. Es versteht sich, daß die Stegteile an den zusammengefügten Flanschen sich nicht auf ganzer Höhe übergreifen müssen, wichtig ist nur, daß eine so ausreichende Querverbindung zwischen den zusammengefügten Flanschen besteht, daß die davon überdeckte Plattenkante ausreichend geschützt ist.

In vorteilhafter Ausgestaltung nach der Erfindung sind die Stegteile in Längsrichtung mit dazwischen liegenden Lücken hintereinander in Schenkelrichtung des Eckwinkels an den Flanschen angeordnet und greifen in zusammengefügter Anordnung die Stegteile des einen Flansches in die Lücken zwischen den Stegteilen des jeweils anderen Flansches ein. Entsprechend stehen die Stegteile nach Art von Zähnen an den Flanschen vor, wobei eine Anordnung entlang von Rändern der Flansche zweckmäßig ist. Die Sicherung der ineinandergreifenden Stegteile der Flansche relativ zueinander, kann durch geeignete Falze und/oder Nut-Feder-Führungen an den Schmalseiten der Stegteile erreicht werden.

Eine unproblematischere Führung der ineinandergreifenden Stegteile an den Flanschen bei lückenloser Überdeckung unabhängig von dem Abstand der Flansche erzielt man nach der Erfindung dann, wenn die Stegteile in den Schenkelrichtungen des Eckwinkels jeweils in miteinander parallelen Doppelreihen an den Flanschen angeordnet sind, wobei die Stegteile der einen Reihe auf Höhe der Lücken zwischen den Stegteilen der jeweils anderen Reihe sitzen. Hierbei überlappt bei zusammengefügten Flanschen jeweils ein Stegteil des einen Flansches ein Stegteil des anderen Flansches an dessen Längsseite.

Um hierbei eine flächige Anlage der ineinandergreifenden Stegteile aneinander zu vermeiden, können die Stegteile an ihren dem jeweiligen Stegteil des anderen Flansches in zusammengefügter Anordnung zugekehrten Längsseiten vorstehende Stegansätze haben, die in zusammengefügter Anordnung mit ihren Stirnseiten an der Längsseite des jeweils gegenüberliegenden Stegteils reib- und/oder formschlüssig anliegen. Die vorstehenden Stegansätze bewirken vor allem auch eine Versteifung der Stegteile, die somit gegen ein unbeabsichtigtes Umbiegen gesichert sind.

Einen Formschluß zwischen den Stegansätzen und dem damit korrespondierenden Längsseiten des jeweils anderen Stegteils erreicht man durch Verzahnungen, die entweder an den Stirnseiten der Stegansätze oder an den Längsseiten des jeweils anderen Stegteils angeordnet werden.

Um lange Biegestrecken an den Stegteilen zu vermeiden, ordnet man vorteilhaft die Stegansätze an oder nahe den Stirnenden der Stegteile an und verbindet die Stirnenden der Stegansätze der gegeneinander versetzten, doppelreihig angeordneten Stegteile jedes Flansches mittels diagonaler Rippen miteinander. Auch hierdurch ergibt sich eine weitere Versteifung der Stegteile. In zusammengefügter Anordnung zweier Flansche kreuzen die diagonalen Rippen zwischen den aneinander grenzenden Stegteilen einander, und sie haben deshalb lediglich die halbe Höhe der Stegteile, damit sie übereinander passen, ohne ein Zusammenstecken der Flansche auf minimalem Abstand zu behindern.

Damit beim Zusammenfügen zweier Flansche die ineinandergreifenden Stegteile leicht miteinander verzahnt werden können, haben die Stegansätze und die Stirnenden an den Stegteilen zweckmäßig an den Oberecken Auflaufschrägen.

Im Hinblick auf eine universelle Austauschbarkeit der Flansche untereinander sind in bevorzugter Ausführung die von der Ecke weg entlang jedes Schenkels des Eckwinkels verlaufenden Stegteile und die dazwischen liegenden Lücken jedes Flansches jeweils gleich lang, jedoch bei dem einen Schenkel in umgekehrter Folge einander abwechselnd gegenüber dem anderen Schenkel angeordnet, so daß bei zwei zusammengefügten Flanschen die Stegteile des ersten Flansches zu den in dessen Lücken eingreifenden Stegteilen des anderen Flansches bezogen auf die durch die Winkelhalbierende des Eckwinkels hindurchgehende, zu den Flanschen senkrechte Ebene spiegelsymmetrisch sind. Die Flansche können hierdurch bei gleicher Größe, also gleichem Format, identisch ausgebildet werden, sie passen dann mit ihren Stegansätzen in gegeneinander gerichteter Ausrichtung ineinander. Das gleiche trifft für Flansche unterschiedlicher Größe oder Format zu, wenn hier die Stegteile sowie die dazwischen liegenden Lücken eine gleiche Teilung bei unterschiedlicher Anzahl je Eckwinkelschenkel haben. Werden derart unterschiedliche Flansche zusammengefügt, greifen die Stegteile des kleineren Flansches nur in einen Teil der Stegteile und der dazwischen liegenden Lücken des größeren Flansches ein.

Da in den meisten Anwendungsfällen von den Schutzecken die zusammenzuhaltenden Platten oder Plattenstapel rechtwinklig begrenzt sind, haben vorteilhaft die Flansche die Form eines Quadrates oder eines rechtwinkligen Dreiecks, wobei die Stegteile entlang zweier rechtwinklig zueinander stehender Kanten entsprechend einem Eckwinkel von 90 Grad angeordnet sind.

Die Wiederverwendbarkeit der Flansche mit den daran angeformten Stegteilen erfordert die Herstellung aus einem widerstandsfähigen Werkstoff. Deshalb bestehen vorteilhafterweise die Flansche mit den daran festen Stegteilen einstückig aus einem Hartkunststoff. Somit können die jeweils aus zwei Flanschen zusammensetzbaren Schutzecken als Spritzgußteile in großen Stückzahlen kostengünstig produziert werden.

Die Erfindung wird nachfolgend anhand der Zeichnung an Ausführungsbeispielen noch näher erläutert. Dabei zeigen:
- Fig 1: eine perspektivische, gesprengte Darstellung einer Schutzecke in einer ersten Ausführungsform,
- Fig 2: eine perspektivische Darstellung einer zusammengefügten Schutzecke in anderer Ausführung,
- Fig 3: eine perspektivische Ansicht eines der mit Stegansätzen versehenen Flansche der Schutzecke nach Fig 2,
- Fig 4: eine Draufsicht auf einen mit Stegansätzen versehenen Flansch ähnlich dem von Fig 3, jedoch in größerem Format und
- Fig 5: eine Draufsicht auf eine aus zwei Flanschen gemäß Fig 4 zusammengefügte Schutzecke.

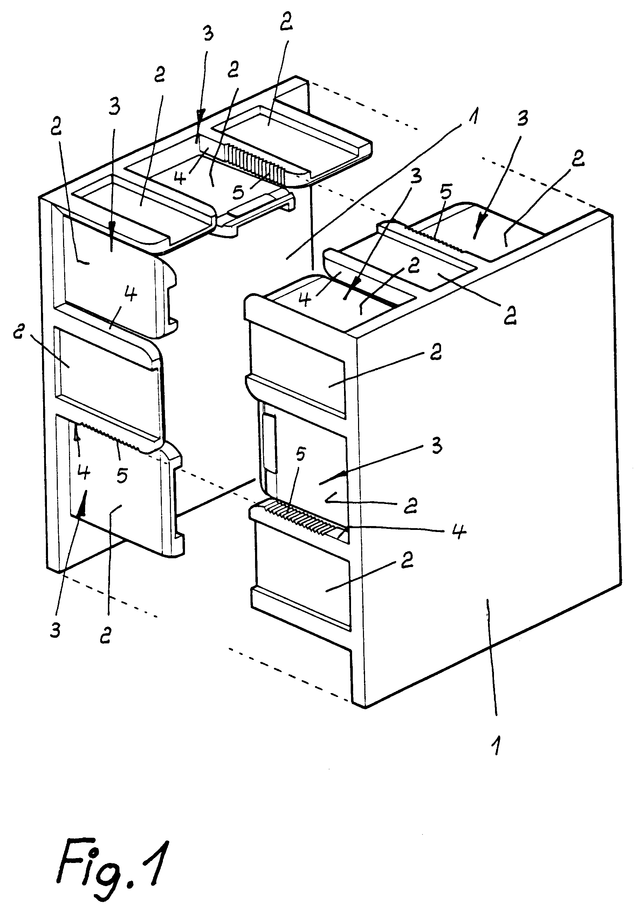

Im einzelnen zeigt Fig 1 eine Schutzecke, die einen taschenförmigen Hohlkörper darstellt, der an zwei benachbarten Schmalseiten offen ist. Dieser Hohlkörper muß aus zwei voneinander getrennten Teilen zusammengesetzt werden. Jedes dieser Teile umfaßt einen Flansch 1, bei dem es sich um ein ebenes Flachteil handelt, welches eine Quadratform haben kann. Entlang zweier rechtwinklig zusammenlaufender Kanten des Flansches 1 sind zur Innenseite daran rechtwinklig vorstehend Stegteile 2 angeformt. Diese Stegteile 2 umschließen eine Innenecke des taschenförmigen Hohlkörpers zusammen mit dem zugehörigen Flansch 1. Jeweils zwei benachbart liegende Stegteile 2 sind zueinander senkrecht zu ihrer Längsrichtung und damit senkrecht zum Verlauf der benachbarten Kante des Flansches 1 versetzt, denn sie sind in ihrer Längsrichtung hintereinander jeweils in dicht beieinander liegenden parallelen Reihen angeordnet. Deshalb findet sich zwischen zwei Stegteilen 2 einer Reihe jeweils eine Lücke 3, die in Kantenrichtung des Flansches 1 gesehen gleich lang wie die Stegteile 2 ist. Alle Stegteile 2 sind von der Ebene des Flansches 1 aus gesehen gleich hoch, das gleiche gilt für die Lücken 3, die jeweils von zwei Stegteilen 2 einer Reihe begrenzt werden.

Zwei der Flansche 1 mit den Stegteilen 2 können, wie es in Fig 1 durch gestrichte Linien angedeutet ist, in gegenständiger Ausrichtung der Stegteile 2 zueinander zusammengefügt werden, wobei jeweils ein Stegteil 2 des einen Flansches 1 in eine Lücke 3 zwischen den Stegteilen 2 des anderen Flansches 1 paßt. Zudem sind die Stegteile 2 einer Reihe immer auf Höhe der Lücke 3 der parallel benachbarten anderen Reihe angeordnet, so daß sich in zusammengefügter Anordnung der beiden Flansche 1 die Stegteile 2 zu einem gegenüber der Öffnungsseite des taschenförmigen Hohlkörpers verlaufenden, die Flansche 1 verbindenden sowie lückenlos geschlossenen Quersteg ergänzen. Dabei sichern sich die einander überlappenden sowie aneinanderangrenzenden Stegansätze 2 beider Flansche 1 gegenseitig, wobei ein Auseinanderfallen der beiden Flansche mit den jeweiligen Stegansätzen 2 durch Reibschlüsse verhindert sein kann. Die Sicherung der beiden Flansche 1 in zusammengefügter Anordnung kann noch durch Formschlußelemente gesteigert werden, die beim Ausführungsbeispiel nach Fig 1 in Gestalt von Verzahnungen 5 bestehen, die an zumindest einigen der Schmalseiten 4 der Stegteile 2 angeformt sind. Diese Anordnung der Verzahnungen 5 erfordert, daß die Stegteile 2 zweier zusammengefügter Flansche 1 mit ihren Schmalseiten 4 jeweils unmittelbar aneinander anliegen, soweit es zumindest diejenigen Stegteile 2 betrifft, die in die Lücken 3 zwischen den Stegteilen 2 des jeweils anderen Flansches 1 eingreifen.

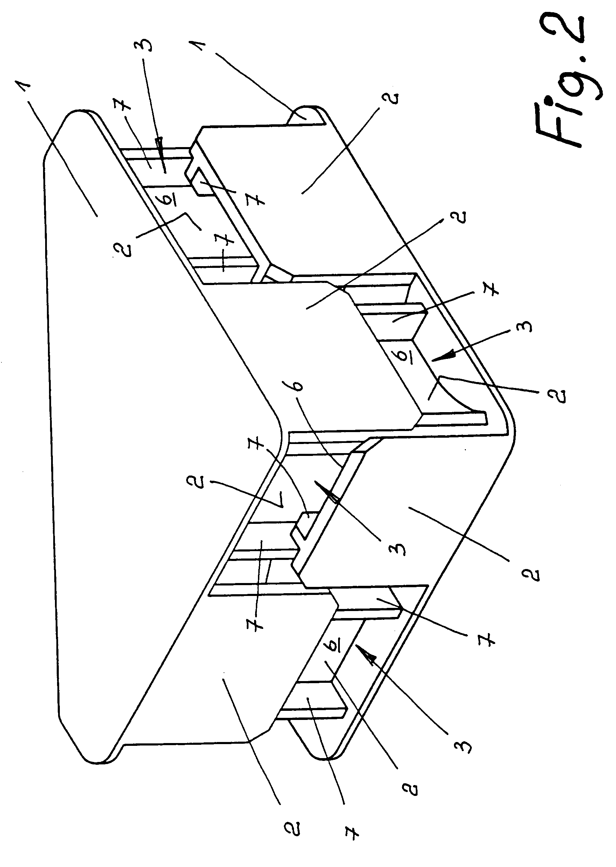

Fig 2 zeigt eine andere Ausführungsform einer Schutzecke mit Flanschen 1, die die Grundform eines rechtwinkligen Dreiecks haben. Hier liegt die Öffnung des taschenförmigen Hohlkörpers an der Hypothenusenseite der dreieckigen Grundform, entsprechend sind die Stegteile 2 hier entlang der Kathetenseiten der Grundform der Flansche 1 angeordnet. Das Schachtelungsprinzip der Stegteile 2 der zusammengefügten Flansche 1 ist das gleiche wie bei der Ausführungsform nach Fig 1, deshalb sind auch hier die Stegteile 2 in zwei zueinander parallelen Reihen nahe dem Rand an jedem der Flansche 1 angeformt. In zusammengefügter Anordnung zweier Flansche 1 ergibt sich dadurch eine Doppelwandung im Bereich des sich durch die Stegteile 2 bildenden Quersteges.

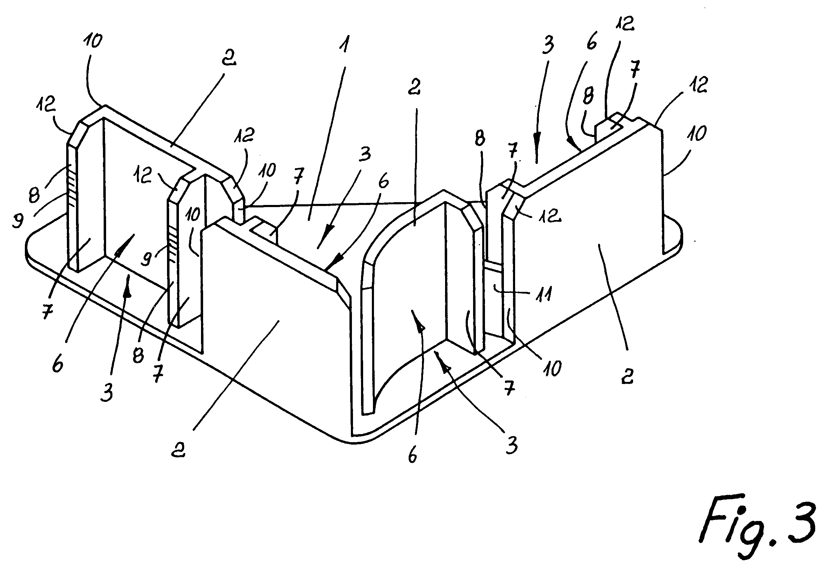

Der sich durch die Stegteile 2 ergebende Quersteg der zusammengefügten Flansche 1 hat bei dem Ausführungsbeispiel nach Fig 2 allerdings aufgrund eines Abstandes der einander überlappenden Stegteile 2 eine größere Dicke. Die Stegteile 2 weisen nämlich an ihren benachbart zu liegen kommenden Längsseiten 6 vorstehende Stegansätze 7 auf, deren Konfiguration sich deutlicher aus Fig 3 ergibt.

Die Stegansätze 7 sind in Querrichtung an die Stegteile 2 angeformt und befinden sich daran entweder an den Stirnenden 10 oder nahe an diesen Stirnenden 10. An ihren Stirnseiten 8 sind die Stegansätze 7 der Stegteile 2 mit Verzahnungen 8 oder dergleichen versehen, die hier ebenfalls einer Reib- und Formschlußsicherung zwischen zwei zusammengefügten Flanschen 1 dienen.

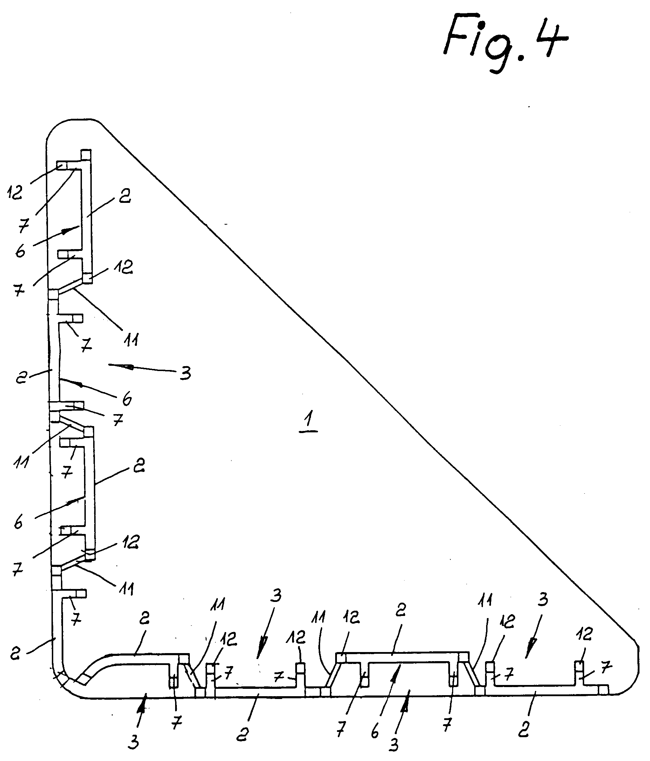

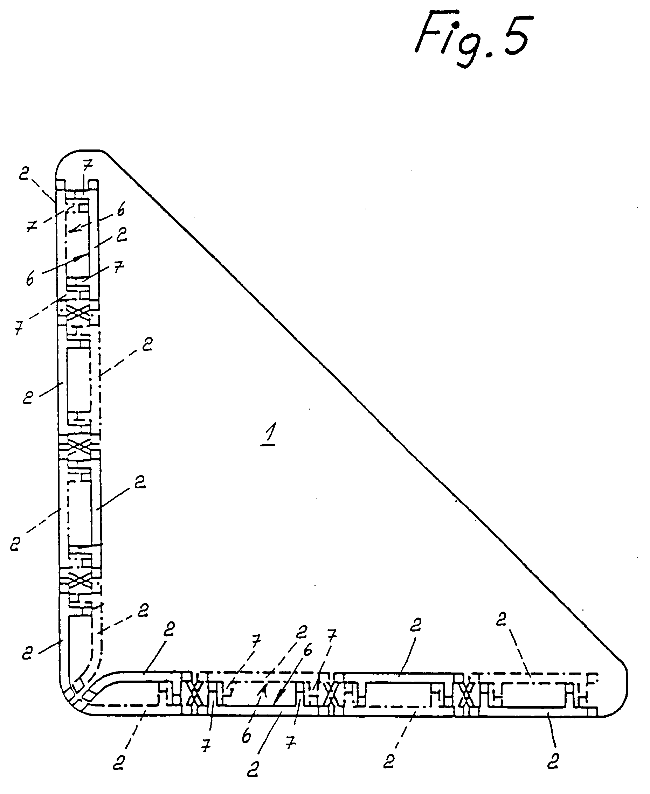

Zwischen zwei benachbarten Stegteilen 2 der nebeneinanderliegenden Stegteilreihen erstreckt sich eine jeweils zur Längsrichtung der Stegteile 2 diagonal verlaufende Rippe 11, welche lediglich die halbe Höhe der Stegteile 2 hat. Die Anordnung dieser diagonalen Rippen 11 zeigt im besonderen Fig 4, woraus deutlich wird, daß die Rippen 11 an die Stirnenden 10 der Stegteile 2 einstückig angeformt sind. Damit befinden sich die Rippen 11 in Nachbarschaft der Stegansätze 7 an den Stegteilen 2, deren Stirnseiten 8 bei zusammengesteckter Anordnung zweier Flansche 1 in senkrechter Richtung zur Längserstreckung der Stegteile 2 mit Druck beaufschlagt werden. Denn wie man Fig 5 entnimmt, liegen in zusammengesteckter Anordnung zweier Flansche 1 die Stegansätze 7 an den Stegteilen 2 des einen Flansches an den einander gegenüberliegenden Innenseiten 6 der Stegteile 2 des anderen Flansches 1 an, wobei der Überstand der Stegansätze 7 an den Stegteilen 2 so bemessen ist, daß an den genannten Berührungsstellen eine Klemmung auftritt, die noch durch die vorerwähnte Verzahnung 9 an den Stirnseiten 8 der Stegansätze 7 unterstützt wird. Die diagonal verlaufenden Rippen 11 tragen mit dazu bei, daß die Stegteile 2 der parallelen Reihen nicht auseinandergebogen werden können, wozu ebenfalls die Anordnung der Stegansätze 7 quer zur Längsrichtung der Stegteile 2 beiträgt. Da in zusammengefügter Anordnung die diagonal verlaufenden Rippen 11 zweier zusammengesteckter Flansche an den Übergangsstellen zwischen den Stegteilen 2 übereinander zu liegen kommen, wobei sie zueinander eine kreuzende Lage einnehmen, was Fig 5 veranschaulicht, haben sie lediglich die halbe Höhe der Stegteile 2.

Damit zwei miteinander zu kombinierende Flansche 1 leicht zusammengesteckt werden können, ohne daß sich die zahnartig dabei ineinandergreifenden Stegteile 2 verkanten, finden sich an den Oberecken der Stegansätze 7 und der Stirnenden 10 der Stegteile 2 Auflaufschrägen 12, die auch ein Zentrieren zweier zusammenfügender Flansche 1 zueinander leichter machen.

Fig 5 zeigt weiter, daß in der zusammengefügten Anordnung beider Flansche 1 deren Stegteile 2 ausgehend vom Scheitel des Eckwinkel zueinander spiegelsymmetrisch sind, wobei die Symmetrieebene durch die Winkelhalbierende des Eckwinkels in senkrechter Richtung zur Ebene der Flansche 1 hindurchgeht. Dabei ist die Folge der einander abwechselnden Stegteile und der dazwischen liegenden Lücken in Richtung des einen Schenkels des Eckwinkels umgekehrt zu der in Richtung des anderen Schenkels des Eckwinkels, so daß zwei identische Flansche 1 miteinander mit gegenständigen Stegteilen 2 zusammengefügt werden können. Das gleiche trifft aber auch für Flansche 1 unterschiedlichen Formats zu, wobei sich die unterschiedlich großen Flansche 1 lediglich durch die Anzahl der in Schenkelrichtung des Eckwinkels angeordneten Stegteile 2 unterscheiden, nicht jedoch durch deren Ausbildung und Teilung, was entsprechend für die zwischen den Stegteilen 2 liegenden Lücken 3 zutrifft. Deshalb können Flansche 1 unterschiedlichen Formats in gleicher Weise wie Flansche 1 gleichen Formats zusammengefügt werden, wobei bei unterschiedlichen Flanschen 1 lediglich vom Scheitel des Eckwinkels aus gesehen über die Kantenlänge des größeren Flansches 1 hinweg nicht sämtliche Stegteile 2 mit korrespondierenden Stegteilen 2 des kleineren Flansches 1 in Eingriff kommen.

## Patentansprüche

1. Schutzecke zum Aufsetzen auf die Ecken von plattenförmigen Werkstücken, wie insbesondere Möbelteilen, zu Transportzwecken oder dergleichen, bestehend aus zwei zueinander parallelen Flanschen (1) mit einem diese verbindenden Quersteg (2), der entsprechend dem von ihm zu umfassenden Eckwinkel über Eck angeordnet ist und der zusammen mit den Flanschen sich zu einem taschenförmigen Hohlkörper ergänzt, der an der dem Quersteg gegenüberliegenden Seite offen ist,
dadurch gekennzeichnet,
daß die Schutzecke aus zwei voneinander getrennten, zu dem taschenförmigen Hohlkörper zusammenfügbaren, Eckenhälften gebildet wird, wobei jede Eckenhälfte einen Flansch (1) aufweist, an dem Stegteile (2) angeordnet sind, die die Eckenhälften gegeneinander sichernde Reib- und/oder Formschlußglieder (5,8,9) haben.

2. Schutzecke nach Anspruch 1,
dadurch gekennzeichnet,
daß die Stegteile (2) in Längsrichtung mit dazwischen liegenden Lücken (3) hintereinander in Schenkelrichtung des Eckwinkels an den Flanschen (1) angeordnet sind und in zusammengefügter Anordnung der Eckenhälften die Stegteile (2) des einen Flansches (1) in die Lücken (3) zwischen den Stegteilen (2) des jeweils anderen Flansches (1) eingreifen.

3. Schutzecke nach Anspruch 2,
dadurch gekennzeichnet,
daß die Schmalseiten (4) der Stegteile (2) bei zusammengefügten Eckenhälften aneinander anliegen und zumindest einige der Schmalseiten (4) Verzahnungen (5) als Formschlußglieder haben.

4. Schutzecke nach Anspruch 2 oder 3,
dadurch gekennzeichnet,
daß die Stegteile (2) in den Schenkelrichtungen des Eckwinkels jeweils in miteinander parallelen Doppelreihen an den Flanschen (1) angeordnet sind, wobei die Stegteile (2) der einen Reihe auf Höhe der Lücken (3) zwischen den Stegteilen (2) der jeweils anderen Reihe sitzen, und daß bei zusammengefügten Eckenhälften jeweils ein Stegteil (2) des einen Flansches (1) ein Stegteil (2) des anderen Flansches (1) an dessen Längsseite überlappt.

5. Schutzecke nach Anspruch 4,
dadurch gekennzeichnet,
daß die Stegteile (2) an ihren dem jeweiligen Stegteil (2) des anderen Flansches (1) in zusammengefügter Anordnung zugekehrten Längsseiten (6) vorstehende Stegansätze (7) haben, die in zusammengefügter Anordnung der Eckenhälften mit ihren Stirnseiten (8) an der Längsseite (6) des jeweils gegenüberliegenden Stegteils (2) reib- und/oder formschlüssig anliegen.

6. Schutzecke nach Anspruch 5,
dadurch gekennzeichnet,
daß an den Stirnseiten (8) der Stegansätze (7) und/oder den damit korrespondierenden Längsseiten (6) des jeweils anderen Stegteils (2) Verzahnungen (9) angeordnet sind.

7. Schutzecke nach Anspruch 5 oder 6,
dadurch gekennzeichnet,
daß die Stegansätze (7) an oder nahe den Stirnenden (10) der Stegteile (2) angeordnet und diese Stirnenden (10) der gegeneinander versetzten, doppelreihig angeordneten Stegteile (2) jedes Flansches (1) mittels diagonaler Rippen (11) miteinander verbunden sind.

8. Schutzecke nach Anspruch 7,
dadurch gekennzeichnet,
daß die diagonalen Rippen (11) zwischen den aneinander grenzenden Stegteilen (2) der zusammengefügten Eckenhälften einander kreuzen und die halbe Höhe der Stegteile (2) haben.

9. Schutzecke nach einem der Ansprüche 5 - 8.
dadurch gekennzeichnet,
daß die Stegansätze (7) und die Stirnenden (10) an den Stegteilen (2) an den freien Endkanten Auflaufschrägen (12) haben.

10. Schutzecke nach einem der Ansprüche 4 - 9,
dadurch gekennzeichnet,
daß die von der Ecke weg entlang jedes Schenkels des Eckwinkels verlaufenden Stegteile (2) und die dazwischen liegenden Lücken (3) jedes Flansches (1) jeweils gleich lang, jedoch bei dem einen Schenkel in umgekehrter Folge einander abwechselnd gegenüber dem anderen Schenkel angeordnet sind, so daß bei zwei zusammengefügten Eckenhälften die Stegteile (2) des einen Flansches (1) zu den in dessen Lücken (3) eingreifenden Stegteilen (2) des anderen Flansches (1) bezogen auf die durch die Winkelhalbierende des Eckwinkels hindurchgehende, zu den Flanschen (1) senkrechte Ebene spiegelsymmetrisch sind.

11. Schutzecke nach Anspruch 10,
dadurch gekennzeichnet,
daß die Flansche (1) gleicher Größe identisch sind.

12. Schutzecke nach Anspruch 10,
dadurch gekennzeichnet,
daß bei Flanschen (1) unterschiedlicher Größe die Stegteile (2) sowie die dazwischen liegenden Lücken (3) eine gleiche Teilung bei unterschiedlicher Anzahl je Eckwinkelschenkel haben.

13. Schutzecke nach einem der Ansprüche 1 - 12,
dadurch gekennzeichnet,
daß die Flansche (1) die Form eine Quadrates oder rechtwinkligen Dreiecks haben und die Stegteile (2) entlang zweier rechtwinklig zueinander stehender Kanten entsprechend einem Eckwinkel von 90 Grad angeordnet sind.

14. Schutzecke nach einem der Ansprüche 1 - 13,
dadurch gekennzeichnet,
daß die Flansche (1) mit den daran festen Stegteilen (2) einstückig aus einem Hartkunststoff bestehen.

## Claims

1. Protective corner for fitting onto the corners of plate-shaped workpieces, such as more particularly furniture parts, for transport or similar purposes, consisting of two flanges (1) parallel to each other and connected by a cross web (2) which is mounted over the corner corresponding to the corner angle which it is to cover and which together with the flanges makes up a pocket-shaped hollow body which is open on the side opposite the cross web
characterised in that the protective corner is formed from two separate corner halves which can be combined to make up the pocket-shaped hollow body wherein each corner half has a flange (1) on which web parts (2) are mounted which have friction and/or keyed locking members (5,8,9) which secure the corner halves relative to each other.

2. Protective corner according to claim 1 characterised in that the web parts (2) are mounted on the flanges (1) one behind the other in the longitudinal direction with gaps (3) inbetween in the arm direction of the corner angle and in the assembled state of the corner halves the web parts (2) of one flange (1) engage in the gaps (3) between the web parts (2) of the relevant other flange (1).

3. Protective corner according to claim 2 characterised in that the narrow sides (4) of the web parts (2) adjoin one another when the corner halves are fitted together and at least some of the narrow sides (4) have cogs (5) forming the keyed locking members.

4. Protective corner according to claim 2 or 3 characterised in that the web parts (2) are each mounted in parallel double rows on the flanges (1) in the arm directions of the corner angle wherein the web parts (2) of one row sit level with the gaps (3) between the web parts (2) of each other row, and that when the corner halves are fitted together each one web part (2) of one flange (1) overlaps a web part (2) of the other flange (1) on its longitudinal side.

5. Protective corner according to claim 4 characterised in that the web parts (2) have on their long sides (6) facing the relevant web part (2) of the other flange (1) in the assembled state protruding web attachments (7) which in the assembled state of the corner halves adjoin through their end sides (8) the long side (6) of each opposite web part (2) with friction and/or keyed engagement.

6. Protective corner according to claim 5 characterised in that cogs (9) are mounted on the end sides (8) of the web attachments (7) and/or the corresponding long sides (6) of each other web part (2).

7. Protective corner according to claim 5 or 6 characterised in that the web attachments (7) are mounted on or near the end sides (10) of the web parts (2) and these end sides (10) of the mutually off-set double row web parts (2) of each flange (1) are connected together by means of diagonal ribs (11).

8. Protective corner according to claim 7 characterised in that the diagonal ribs (11) cross one another between the adjoining web parts (2) of the assembled corner halves and have half the height of the web parts (2).

9. Protective corner according to one of claims 5 - 8 characterised in that the web attachments (7) and the end sides (10) on the web parts (2) have tapers (12) at the free end edges.

10. Protective corner according to one of claims 4 - 9 characterised in that the web parts (2) running away from the corner along each arm of the corner angle and the interposed gaps (3) of each flange (1) are each arranged equal length but with one arm in reversed sequence alternately relative to the other arm so that when two corner halves are fitted together the web parts (2) of one flange (1) are mirror-symmetrical relative to the web parts (2) of the other flange (1) engaging in the gaps (3) in relation to the plane perpendicular to the flanges (1) and passing through the angle dissecting line of the corner angle.

11. Protective corner according to claim 10 characterised in that flanges (1) of the same size are identical.

12. Protective corner according to claim 10 characterised in that in the case of flanges (1) of different size the web parts (2) and the interposed gaps (3) have the same division with different number per corner angle arm.

13. Protective corner according to one of claims 1 - 12 characterised in that the flanges (1) have the shape of a square or right-angled triangle and the web parts (2) are mounted along two edges standing at right angles to each other corresponding to a corner angle of 90 degs.

14. Protective corner according to one of claims 1 to 13 characterised in that the flanges (1) with the web parts (2) fixed thereon are made in one piece from hard plastics.

## Revendications

1. Cornière de protection pour placer sur les angles de pièces usinées en forme de plaques, tout particulièrement d'éléments de meubles, aux fins de transport ou dans d'autres buts, cette cornière étant composée de deux flasques (1) parallèles par rapport l'une à l'autre et d'une traverse (2) les reliant l'une à l'autre, laquelle est disposée angulairement, conformément à l'angle à embrasser, et formant avec les flasques un corps creux en forme de poche ouverte du côté opposé à la traverse,
caractérisée en ce que
la cornière est formée par deux moitiés assemblables pour former un corps creux en forme de poche, chaque moitié présentant une flasque (1) sur laquelle des traverses sont montées, lesquelles sont pourvues d'éléments frottants et/ou à engagement positif (5, 8, 9) qui assurent les moitiés de cornières par rapport l'une à l'autre.

2. Cornière de protection selon la revendication 1,
caractérisée en ce que
les éléments de la traverse (2) sont montées sur les flasques (1) et disposées, à intervalles (3), les uns derrières les autres, longitudinalement, dans le sens des ailes de la cornière, les éléments de traverse (2) de l'une des flasques (1) s'engageant dans les espaces libres (3) de l'autre flasque (1) lorsque les moitiés de la cornière sont réunies.

3. Cornière de protection selon la revendication 2,
caractérisée en ce que
les côtés étroits (4) des éléments de la traverses (2) portent les uns contre les autres lorsque les moitiés de la cornière sont réunies et que quelques-uns de ces côtés étroits (4), au moins, présentent des dentures (5) en forme d'organes à engagement positif.

4. Cornière de protection selon la revendication 2 ou 3,
caractérisée en ce que les éléments de la traverse (2) sont disposés, sur les flasques (1), en doubles rangs parallèles, dans le sens des ailes de la cornière, les éléments de la traverse (2) de l'une des rangée étant engagés, au niveau des espaces libres (3), entre les éléments de la traverse (2) de l'autre rangée et que l'élément de la traverse (2) de l'une des flasques (1) chevauche l'élément de la traverse (2) de l'autre flasque (1) lorsque les deux moitiés de la cornière sont assemblées.

5. Cornière de protection selon la revendication 4,
caractérisée en ce que
les éléments de la traverse (2) sont pourvus de nez en saillies (7) sur leurs côtés longitudinaux (6) dirigé vers les éléments de la traverse (2) de l'autre flasque (1) et que les parties frontales (8) des nez (7) d'un élément de traverse (2) portent, frottants ou en engagement positif, contre le côté longitudinal (6) de l'élément de traverse (2) opposé lorsque les deux moitiés de la cornière sont assemblées.

6. Cornière de protection selon la revendication 5,
caractérisée en ce que
les parties frontales (8) des nez (7) et/ou les côtés longitudinaux (6) de l'autre élément de traverse (2) sont équipés de dentures (9).

7. Cornière de protection selon la revendication 5 ou 6,
caractérisée en ce que
les nez (7) sont disposés aux extrémités frontales (10) des éléments de traverse (2) ou à proximité de celles-ci et que ces extrémités frontales (10) des éléments de traverse (2) de chaque flasque (1), disposées en double rangée et décalées par rapport les uns aux autres sont reliées entre elles à l'aide de nervures diagonales (11).

8. Cornière de protection selon la revendication 7,
caractérisée en ce que
les nervures diagonales (1) se croisent entre les éléments de traverse (2) adjacents des moitiés de cornière assemblées et qu'elles présentent la moitié de la hauteur des éléments de traverse (2).

9. Cornière de protection selon l'une des revendications 5 à 8,
caractérisée en ce que,
les bords d'extrémité libres des nez (7) et les extrémités frontales (10) présentent des biais (12).

10. Cornière de protection selon l'une des revendications 4 à 9,
caractérisée en ce que
les éléments de traverse (2), s'éloignant de l'angle, le long de chaque aile de la cornière, et les espaces libres (3) de chaque flasque (1) ont, respectivement, la même longueur, ceux concernant l'une des aile étant, cependant, disposés, dans l'ordre contraire, en s'alternant, par rapport à l'autre aile de sorte que, lorsque les deux moitiés sont réunies, les éléments de traverse (2) de l'une des flasques (1) sont symétriquement réfléchis, par rapport aux éléments de traverse (2) de l'autre flasque (1) s'engageant leurs espaces libres, ceci par rapport au plan perpendiculaire aux flasques qui traverse la bissectrice de la cornière.

11. Cornière de protection selon la revendication 10, caractérisée en ce que
les flasques (1) de même taille sont identiques.

12. Cornière de protection selon la revendication 10, caractérisée en ce que
les flasques (1) de taille différente présente des éléments de traverse (2) et des espaces libres (3) de même division, mais de nombre différent selon l'aile de la cornière.

13. Cornière de protection selon l'une des revendications 1 à 12,
caractérisée en ce que
les flasques (1) ont la forme d'un carré ou d'un triangle à angles droits et que les éléments de traverse (2) sont disposés, selon un angle de 90 degrés, le long de deux bords, disposés à angle droit par rapport l'un à l'autre.

14. Cornière de protection selon l'une des revendications 1 à 13,
caractérisée en ce que
les flasques (1) et les éléments de traverse (2) sont formés d'une seule pièce en matière plastique.
